# EUROPÄISCHE PATENTSCHRIFT

(11) **EP 2 424 390 B1**
(45) Veröffentlichungstag und Bekanntmachung des Hinweises auf die Patenterteilung: **17.04.2013**
(21) Anmeldenummer: 10716546.6
(22) Anmeldetag: 30.04.2010
(51) Int. Cl.: A23L 2/02, A23L 2/385, A23L 2/38

(54) **FERMENTATIVE HERSTELLUNG VON ALKOHOLFREIEN GETRÄNKEN**
PRODUCTION OF NONALCOHOLIC BEVERAGES BY FERMENTATION
PRODUCTION DE BOISSONS SANS ALCOOL PAR FERMENTATION

(30) Priorität: 30.04.2009 DE 102009019525
(43) Veröffentlichungstag der Anmeldung: 07.03.2012
(73) Patentinhaber: Nordmann Fine Food GmbH, 18439 Stralsund (DE)
(72) Erfinder: BERBERICH, Markus, 18573 Altefähr (DE); LUCAS, Frank, 18439 Stralsund (DE); PUTTNIES, Christoph, 18439 Stralsund (DE); NORDMANN, Oliver, 18573 Altefähr (DE)
(74) Vertreter: Weiss, Wolfgang
(86) Internationale Anmeldenummer: PCT/EP2010/055927
(87) Internationale Veröffentlichungsnummer: WO 2010/125193

(56) Entgegenhaltungen:
- EP-A1- 0 544 643
- EP-A2- 0 930 359
- WO-A1-95/22911
- DE-U1-202006 004 209
- DATABASE WPI Week 200124 Thomson Scientific, London, GB; AN 2001-229096 XP2556868 & JP 2001 000157 A (BRAUSTERN KK) 9. Januar 2001 (2001-01-09)
- DATABASE WPI Week 200451 Thomson Scientific, London, GB; AN 2004-529808 XP2556869 & JP 2004 201604 A (FUKKOYA KK) 22. Juli 2004 (2004-07-22)

## Beschreibung

Die vorliegende Erfindung betrifft ein Verfahren zur fermentativen Herstellung von alkoholfreien Getränken, vorzugsweise unter Verwendung biologischer (bio-zertifizierter) Rohstoffe.

WO 95/22911 beschreibt ein fermentatives Verfahren zur Herstellung eines alkoholfreien Erfrischungsgetränks unter Verwendung eines Mikroorganismus, der Glucose in Gluconsäure umwandelt. Ein Nachteil dieses Verfahrens ist, dass dem resultierenden Getränk Zucker, insbesondere Saccharose, zugesetzt und der pH-Wert durch Zugabe von anorganischen Salzen wie Calcium- und Magnesiumcarbonat eingestellt werden muss.

EP-A-0 930 359 betrifft ebenfalls ein Verfahren zur fermentativen Herstellung eines Getränks, wobei ein einen Cerealienextrakt enthaltendes Ausgangsmaterial einer zweistufigen fermentativen Behandlung unterzogen wird, wobei die erste Stufe eine Behandlung mit Lactobacillus und Hefe oder Hefe-Lysat und die zweite Stufe eine Behandlung mit einem Acetobacter umfasst. Auch hier muss dem Produkt Zucker zugesetzt und der pH-Wert durch Zugabe von Calcium- und Magnesiumcarbonat eingestellt werden.

DE 10 2008 048 939 betrifft ein Verfahren, bei dem aus einem aufgeschlossenen Cerealienextrakt eine Würze erzeugt und diese mit Lactobacillus behandelt wird, um eine milchsaure Würze zu erhalten. Nach dem Erhitzen der milchsauren Würze wird diese mit Hefe oder Hefe-Lysat behandelt, um eine Malzbase zu erhalten. Diese wird anschließend mit Fruchtsaft ausgemischt.

Die der Erfindung zugrunde liegende Aufgabe bestand darin, ein vereinfachtes Herstellungsverfahren zur fermentativen Herstellung von alkoholfreien Getränken, insbesondere alkoholfreien Fruchtsaft- und Colagetränken, zu entwickeln, bei dem die Nachteile früherer Verfahren weitestgehend vermieden bzw. der Herstellungsaufwand erheblich vermindert werden kann. Das Verfahren hat eine weitgehende Fermentation aller Getränkekomponenten zum Ziel.

Ein Gegenstand der Erfindung ist ein Verfahren zur fermentativen Herstellung eines alkoholfreien Erfrischungsgetränks beispielsweise auf Fruchtsaftbasis oder auf Basis von Agavendicksaft und Röstmalzbier, umfassend die Schritte:
(a) Bereitstellen eines aufgeschlossenen Cerealienextrakts,
(b) Erzeugen einer Würze aus dem Cerealienextrakt,
(c) Behandeln der Würze aus Schritt (b) mit Lactobacillus-Mikroorganismen, um eine milchsaure Würze zu erhalten, nachfolgend als Sauergut bezeichnet,
(d) Ausmischen des Sauerguts aus Schritt (c) mit einer Zucker enthaltenden Flüssigkeit, insbesondere umfassend das Zumischen von Fruchtsaft, das Zumischen von Fruchtsaftkonzentrat oder das Zumischen von Agavendicksaft und Röstmalzbier, und Behandeln der Mischung mit Lactobacillus-Mikroorganismen, um ein fermentiertes Getränk zu erhalten,
(e) Erhitzen des fermentierten Getränks aus (d) zum Stoppen der Fermentation, dem Ausdampfen unerwünschter Aromen und der Sterilisation und anschließendes Abkühlen,
(f) Ausmischen des Getränks, insbesondere umfassend das Zumischen von Aromen, Kohlensäure, sowie gegebenenfalls Wasser und
(g) Durchführen weiterer Behandlungsschritte zur Stabilisierung, Klärung und Vervollständigung des Getränks.

Ein weiterer Gegenstand der Erfindung ist die Herstellung eines Konzentrats für ein alkoholfreies Erfrischungsgetränk beispielsweise auf Fruchtsaftbasis oder auf Basis von Agavendicksaft und Röstmalzbier, umfassend die Schritte:
(a) Bereitstellen eines aufgeschlossenen Cerealienextrakts,
(b) Erzeugen einer Würze aus dem Cerealienextrakt,
(c) Behandeln der Würze aus Schritt (b) mit Lactobacillus-Mikroorganismen, um eine milchsaure Würze zu erhalten, nachfolgend als Sauergut bezeichnet,
(d) Ausmischen des Sauerguts aus Schritt (c) mit einer Zucker enthaltenden Flüssigkeit, insbesondere umfassend das Zumischen von Fruchtsaft, das Zumischen von Fruchtsaftkonzentrat oder das Zumischen von Agavendicksaft und Röstmalzbier, und Behandeln der Mischung mit Lactobacillus-Mikroorganismen, um ein fermentiertes Getränk zu erhalten,
(e) Erhitzen des fermentierten Getränks aus (d) zum Stoppen der Fermentation, dem Ausdampfen unerwünschter Aromen und der Sterilisation und anschließendes Abkühlen,
(h) Entziehen von Wasser aus dem fermentierten Getränk, z.B. bis zu einem Anteil verbleibender Trockensubstanz von 45-85%, bevorzugt von 50-60% bezogen auf das Gesamtgewicht des resultierenden Konzentrats, gegebenenfalls nach Stabilisierung und Behandlung.

Das erfindungsgemäße Verfahren enthält mehrere bevorzugte Merkmale, die einzeln oder in Kombination eine besonders vorteilhafte Wirkung erzielen:
Diese Merkmale sind wie folgt:
   - Verwendung einer Mischung von Weizen- und Gerstenmalz, einer Mischung von Melanoidin- und Gerstenmalz oder von Gerstenmalz allein als Ausgangsmaterial,
   - Verwendung einer Mehrfachmaischprozedur,
   - Durchführung eines einstufigen Fermentationsprozesses mit Lactobacillus-Mikroorganismen zur Gewinnung des Sauerguts,
   - Ausmischung des Sauerguts mit Fruchtsaft, Fruchtsaftkonzentrat oder Agavendicksaft und Röstmalzbier vorzugsweise unter Zusatz von Wasser und anschließende Fermentation dieser Mischungen mit Lactobacillus-Mikroorganismen,
   - Erhitzen der fermentierten Getränkemischung zum Entfernen unerwünschter Aromastoffe und zum Stoppen der Fermentation,
   - stufenweise Abkühlung der erhitzten Mischung,
   - Zugabe der Aromakomponenten, Kohlensäure und gegebenenfalls von Wasser,
   - Stabilisierung des Getränks durch eine mehrstufige, insbesondere vierstufige Separationsprozedur,
   - ausschließliche Verwendung biologischer Rohstoffe, insbesondere von Rohstoffen in biozertifzierter Qualität.

Die vorliegende Erfindung betrifft die Herstellung alkoholfreier Getränke, vorzugsweise alkoholfreier Erfrischungsgetränke auf Fruchtsaftbasis und alkoholfreier Colagetränke auf Basis von Agavendicksaft und Röstmalzbier. Der Alkoholgehalt der resultierenden Getränke ist im allgemeinen < 1,2 Vol.-%, vorzugsweise <0,5Vol.-%. Zur Herstellung der Getränke werden vorzugsweise ausschließlich biologische (bio-zertifizierter) Rohstoffe, z.B. Rohstoffe gemäß EG-Bioverordnung, verwendet. Weiterhin erfolgt in einer bevorzugten Ausführungsform die Herstellung von Sauergut für die Getränke unter Beachtung des deutschen Reinheitsgebots für Bier, d.h. als Zusätze werden lediglich Malz, Wasser und vergärende Mikroorganismen eingesetzt. In anderen Ausführungsformen kann das erfindungsgemäße Verfahren jedoch auch industrielle Abwandlungen der bevorzugten Herstellungsweise betreffen.

Schritt (a) des Verfahrens umfasst das Bereitstellen eines aufgeschlossenen Cerealienextrakts. Vorzugsweise wird hierzu als Ausgangsmaterial Malz in Bioqualität verwendet. Das Ausgangsmaterial umfasst vorzugsweise Gerstenmalz, gegebenenfalls in Kombination mit anderen Malzsorten. Beispielsweise kann man eine Mischung aus Gerstenmalz und Melanoidinmalz, beispielsweise mit einem Anteil von Melanoidinmalz von 1-10 Gew.-%, vorzugsweise 1-3 Gew.-% verwenden. Alternativ wird eine Mischung aus Weizen- und Gerstenmalz, insbesondere in Bioqualität eingesetzt. Der Weizenanteil umfasst vorzugsweise 40-75 Gew.-%, z.B. ca. 60-70 Gew.-%. Die Malze werden auf übliche Weise einem Aufschlussverfahren, z.B. einer Schrotung, unterzogen und anschließend mit Wasser, insbesondere Brauwasser, vermischt. Statt den Malzen können jedoch auch fertige Zuckerprodukte, z.B. Glucosesirups oder Invertzucker, gegebenenfalls mit Malzlösungen, zum Einsatz kommen, wodurch nachstehende Maischprozedur vereinfacht oder vermieden werden kann.

Gemäß Schritt (b) wird eine Würze aus dem aufgeschlossenen Cerealienextrakt erzeugt. Vorzugsweise umfasst Schritt (b) eine Maischprozedur, insbesondere eine Mehrfachmaischprozedur. Dabei wird der aufgeschlossene Cerealienextrakt einem Kochmaischverfahren unterzogen mit dem Ziel, einen intensiven natürlichen Aufschluss der im Malz enthaltenen natürlichen Stärke und Mehrfachzucker zu erreichen.

Die Maischprozedur wird vorzugsweise für eine Dauer von 1-6 h, z.B. von etwa 1,5 h, und einem Temperaturbereich von 30-80 °C, vorzugsweise bei 60-78 °C, bei atmosphärischen Bedingungen durchgeführt. Günstigerweise umfasst die Maischprozedur ein fortwährendes, vorzugsweise ein ein- oder zweimaliges Ziehen und Wiederzumischen von Teilmaischen. Gegebenenfalls kann zusätzlich ein immer wieder erfolgendes Zuführen und Einrühren kalter, frisch eingemaischter Malzschrotlösung erfolgen. Damit wird gemäß dem Reinheitsgebot für Bier ein natürlicher Abbau von Stärke bis zur Glucose und eine optimale Wirkung der natürlichen Malzenzyme erreicht. Die entstehende Glucose weist eine höhere Süßkraft als die ansonsten überwiegend in Maische vorliegende Maltose auf, wodurch bis ins fertige Getränk eine geschmacklich vorteilhafte Wirkung erreicht wird.

In einer industriellen Ausführungsform des Verfahrens kann die Malzwürze mit industriellen, stärke- und zuckerabbauenden Enzymen versetzt werden. Dies entspricht zwar nicht dem Reinheitsgebot, ermöglicht jedoch eine erhebliche Abkürzung und Vereinfachung des Verfahrens.

Weiterhin umfasst Schritt (b) vorzugsweise eine Abtrennung von Feststoffen zur Erzeugung einer klaren Vorderwürze. Hierzu wird die Maische beispielsweise in einem so genannten Läuterbottich oder einer anderen Vorrichtung, z.B. einem Maischefilter, filtriert, d.h. die Feststoffe werden von der Flüssigkeit abgetrennt. Dabei wird eine Vorderwürze mit einem Stammwürzegehalt von günstigerweise 6-25 %, vorzugsweise von 10-22 %, z.B. etwa 19-21 %, erhalten, welche vorzugsweise mit Kaltwasser auf 13-14 % verdünnt wird. Die Vorderwürze ist vorzugsweise sehr blank, d.h. sie hat einen Trübungswert von vorzugsweise unter 5 EBC-Einheiten und günstigerweise einen Glucoseanteil von 0,5-1,5 Gew.-% und/oder ein Gewichtsverhältnis von Glucose zu Maltose von 1:4 bis 1:15. Es ist zu erwarten, dass eine Maische von Gersten- und Melanoidinmalz ohne Weizenmalz einen etwas niedrigeren Glucosegehalt zur Folge hat.

Die resultierende und gegebenenfalls verdünnte Vorderwürze wird auf eine Temperatur von etwa 35-55 °C, vorzugsweise auf etwa 40-50 °C eingestellt.

Die entstehende flüssige Würze wird gemäß Schritt (c) des Verfahrens mit Lactobacillus-Mikroorganismen behandelt. Die Lactobacillen, vorzugsweise *Lactobacillus delbrückii,* werden vorzugsweise in einer Konzentration von 3-20 Gew.-%, vorzugsweise etwa 6-14 Gew.-%, der Würze zugeimpft. Dann erfolgt vorzugsweise über eine Dauer von 48-72 h, bei einer Temperatur von 35-55 °C, insbesondere von 45-48 °C, eine Milchsäurevergärung der Würze. Vorzugsweise wird die Milchsäurevergärung bis zu einem Milchsäuregehalt von 0,6-1,2 Gew.-%, vorzugsweise von 0,8-1,0 Gew.-% durchgeführt und so genanntes Sauergut gewonnen.

Schritt (d) des erfindungsgemäßen Verfahrens umfasst das Ausmischen des Sauerguts, wobei das Sauergut mit einer Zucker enthaltenden Flüssigkeit, z.B. einem Saft, Sirup, Konzentrat oder Nektar aus Früchten oder anderen pflanzlichen Materialien, z.B. Agave, gegebenenfalls unter Zusatz von Röstmalzbier verdünnt wird. Bevorzugt verwendet man Flüssigkeiten, die nur natürlich vorhandenen Zucker, z.B. Fruchtzucker, enthalten und frei von zugesetztem Zucker sind. So kann man beispielsweise einen Fruchtsaft bestehend aus Fruchtsaftkonzentrat und Wasser ohne Zuckerzusatz verwenden. Dabei wird vorzugsweise eine Konzentration des Sauerguts von 0,5-15 Gew.-%, besonders bevorzugt von 1-10 Gew.-%, eingestellt. Bei Bedarf kann während des Ausmischens auch Wasser und/oder eine andere Komponente, z.B. Röstmalzbier, zugesetzt werden. Dann erfolgt eine Milchsäurevergärung vorzugsweise bis zu einem Milchsäuregehalt von 0,05-0,6 Gew.-% (Milchsäuregehalt berechnet als Zitronensäure mit Faktor 0,64 bei Titration von 10 ml mit 0,1 N NaOH).

Gemäß einer ersten bevorzugten Ausführungsform werden in Schritt (d) 1-10 Gew.% oder 1-5 Gew.-%, vorzugsweise etwa 2,5-5 Gew.-% oder 1,5-2,5 Gew.-% des Sauerguts aus Schritt (c) zur Gewinnung alkoholfreier Erfrischungsgetränke auf Fruchtsaftbasis mit, je nach gewünschtem Geschmack des Endprodukts, unterschiedlichen Fruchtsäften, vorzugsweise biologischen Fruchtsäften, z.B. Trauben- und/oder Apfelsäften und gegebenenfalls mit Wasser, vorzugsweise Brauwasser, vermischt. Vorzugsweise werden Fruchtsäfte des Brixwertes 6-20 und des Filtrationsgrades von < 15 NTU (= Trübungsintensität) eingesetzt.

Die Mischung wird günstigerweise über eine Dauer von 5-72 h, vorzugsweise 12-48 h bei einer Temperatur von 35-55 °C, insbesondere von 45-48 °C, mit den Lactobacillen des Sauerguts fermentiert. Vorzugsweise wird diese Milchsäurevergärung bis zu einem Milchsäuregehalt von 0,05-0,4 Gew.-%, vorzugsweise von 0,2-0,3 Gew.-% durchgeführt (berechnet als Zitronensäure wie oben angegeben).

In einer industriellen Ausführungsform des Verfahrens zur Erhöhung der Kapazität kann die oben beschriebene Mischung auch ohne den Wasserzusatz und nur mit einer Teilmenge des zugesetzten Fruchtsafts erfolgen. Die Mischung wird dann günstigerweise über eine Dauer von 5-170 h, vorzugsweise 12-72 h, bei einer Temperatur von 35-55 °C, insbesondere von 45-48 °C, fermentiert. Günstigerweise wird diese Milchsäurevergärung bis zu einem Milchsäuregehalt von 0,1-0,55 Gew.-%, vorzugsweise von 0,1-0,36 Gew.-% (berechnet als Zitronensäure s.o.) durchgeführt. Anschließend wird der restliche Fruchtsaft der Mischung vor dem folgenden Kochschritt (e) zugesetzt und das erforderliche Wasser in einem Lagertank bei Schritt (f) und/oder in einem Drucktank bei Schritt (g) zugemischt.

Gemäß einer weiteren bevorzugten Ausführungsform werden in Schritt (d) 1-10 Gew.-%, vorzugsweise etwa 4-6 Gew.-% des Sauerguts aus Schritt (c) zur Gewinnung alkoholfreier Colagetränke mit Agavendicksaft und Röstmalzbier versetzt. Als Agavendicksaft wird vorzugsweise biologischer, mindestens nach EG-Bio-VO zertifzierter Agavendicksaft aus 100 % Agave verwendet. Vorzugsweise wird Agavendicksaft mit einem Brixwert von 60-90° (%TSS) vorzugsweise mit mindestens 75° Brix und einem Fructose-Glucoseverhältnis von 70-80:30-20 verwendet.

Als Röstmalzbier wird vorzugsweise ein biologisch gebrautes Bier aus Gerstenröstmalz mit einem Brixwert von 40-60 Gew.-% Extrakt, vorzugsweise 43-57 Gew.-% und einem Farbwert von 8.000-8.600 EBC-Einheiten verwendet. Alternativ zum Einsatz von fertigem Röstmalzbier kann auch dem Cerealienextrakt von Schritt (a) Gerstenröstmalz, vorzugsweise in Bioqualität, zugesetzt werden.

Anstelle von Agavendicksaft kann auch mit Traubensüße oder (Bio-)Zuckersirup und/oder anstelle von Röstmalzbier mit (Bio-)Zuckerkulör oder (Bio-)Karamel gearbeitet werden.

Die Mischung wird günstigerweise über eine Dauer von 5-72 h, vorzugsweise 36-56 h bei einer Temperatur von 35-55 °C, insbesondere von 45-48 °C mit den Lactobacillen des Sauerguts fermentiert. Vorzugsweise wird diese Milchsäurevergärung bis zu einem Milchsäuregehalt von 0,05-0,3 Gew.-%, vorzugsweise von 0,1-0,18 Gew.-% durchgeführt (berechnet als Zitronensäure wie oben angegeben).

In einer industriellen Ausführungsform des Verfahrens zur Erhöhung der Kapazität kann die oben beschriebene Mischung mit nur einer Teilmenge an Agavendicksaft, Wasser und Röstmalzbier erfolgen. Die Mischung wird dann günstigerweise über eine Dauer von 5-170 h, vorzugsweise 12-72 h, bei einer Temperatur von 35-55 °C, insbesondere von 45-48 °C fermentiert. Günstigerweise wird diese Milchsäurevergärung bis zu einem Milchsäuregehalt von 0,1-0,4 Gew.-%, vorzugsweise von 0,1-0,25 Gew.-% (berechnet als Zitronensäure wie oben angegeben) durchgeführt. Anschließend wird der restliche Agavendicksaft und das restliche Röstmalzbier der Mischung vor dem folgenden Kochschritt (e) zugesetzt und das erforderliche Wasser im Lagertank bei Schritt (f) und/oder im Drucktank bei Schritt (g) zugemischt.

Gemäß Schritt (e) wird die fermentierte Mischung nach Erreichen des angestrebten Milchsäuregehalts erhitzt, vorzugsweise bei einer Temperatur von 99-105 °C über eine Dauer von 3-20 min und einem Druck von 0-0,2 bar, vorzugsweise über eine Dauer von 5-8 min bei atmosphärischem Druck und offenem Brüdenabzug. Damit wird der Fermentationsvorgang gestoppt, unerwünschte Aromen, besonders aus der Fermentation stammende, werden ausgedampft und der Ansatz wird sterilisiert.

Anschließend wird der gekochte Ansatz auf 1-5 °C gegebenenfalls in mehreren Stufen abgekühlt, vorzugsweise in zwei Stufen, zunächst direkt nach der Kochung auf 8-12 °C, z.B. auf 8-9 °C, und nach erfolgtem Umpumpen in den Lagertank in einem zweiten Schritt auf 1-2 °C oder während des Umpumpens in den Lagertank über Kühlvorrichtungen, z.B. Tiefkühler in einem zweiten Schritt auf 1-2 °C.

Das abgekühlte fermentierte fruchtsafthaltige Erfrischungs- oder Colagetränk kann anschließend zwischengelagert werden, z.B. in einem Lagertank bei etwa 1 °C und unter einem Druck von etwa 0-0,5 bar, bis zur Ausmischung nach Schritt (f) und der Endherstellung nach Schritt (g).

Das Ergebnis ist ein Grundprodukt zur Herstellung eines Erfrischungsgetränks, welches noch nicht mit Aroma und CO₂ versetzt ist und Trübstoffe enthält. Das Grundprodukt enthält 0,5-15 Gew.-%, vorzugsweise 1-10 Gew.-% Sauergut. Weiterhin weist das Grundprodukt vorzugsweise einen Anteil von 0,1-0,8 Gew.-%, vorzugsweise von 0,1-0,5 Gew.-% Milchsäure (berechnet als Zitronensäure wie oben angegeben) auf. Das Grundprodukt ist vorzugsweise frei von Rückständen aus Hefeorganismen und/oder Rückständen aus Gluconobacter-Organismen.

Schritt (f) des erfindungsgemäßen Verfahrens umfasst die Ausmischung des fermentierten Ansatzes zum fertigen Getränk, vorzugsweise durch Zugabe der natürlichen Aromen, vorzugsweise in zertifizierter Bioqualität. Dieser Prozessschritt wird vorzugsweise unter einer CO₂-Atmosphäre, z.B. in einem geeigneten Tank, durchgeführt. Vorzugsweise erfolgt der Prozess unter Tiefkühlung bei 0-4 °C, besonders bevorzugt bei etwa 1 °C, und unter einem Druck von 1-2 bar.

Bevorzugt wird dieser Prozessschritt unter intensiver Durchmischung durchgeführt, so dass die im Tank befindliche Kohlensäure sich intensiv im Getränk bindet, wobei ein Fertiggetränk mit sehr feinperliger Kohlensäure mit Gehalten von vorzugsweise 1-8 g Kohlensäure pro Liter Getränk, besonders bevorzugt 3,5-4 g/l für die alkoholfreien Getränke auf Fruchtsaftbasis und bevorzugt 6,5-7,5 g/l für das alkoholfreie Colagetränk erhalten wird. Vorzugsweise kann auf die in Verfahren des Standes der Technik angewandte Carbonisierung durch Eindüsung der Kohlensäure vor der Abfüllung verzichtet werden.

In der industriellen Ausführungsform des Verfahrens zur Erhöhung der Kapazität wird in diesem Prozessschritt die zur Ausmischung des Fertiggetränks jeweils erforderliche Wassermenge an dieser Stelle und/oder im Drucktank bei Schritt (g) zugesetzt.

Ein besonderer Vorteil der erfindungsgemäßen Technologie der Vollfermentation mit unmittelbarer Karbonisierung des Getränks nach Abkühlung ist die weitgehende Vermeidung des Hinzutritts von Sauerstoff. Dadurch erhöht sich die oxidative Stabilität des Getränks und damit seine Geschmacksstabilität und seine mikrobielle Stabilität erheblich. Vorzugsweise besitzen die resultierenden Getränke eine Stabilität von mehr als 10 Warmtagen (Lagerung für jeweils 1 Tag bei 0 °C gefolgt von jeweils 1 Tag bei 40 °C).

Weiterhin können durch die Kältebehandlung auch trübungsbildende Stoffe ausgefällt werden. Eine kontinuierliche Entfernung dieser Trübstoffe aus dem Lager- bzw. Ausmischtank trägt ebenfalls zur Erhöhung der physikalischen Stabilität der Fertiggetränke bei.

In einer weiteren industriellen Ausführungsform des Verfahrens erfolgt die Ausmischung des Getränks durch Zugabe der natürlichen Aromen, vorzugsweise in zertifizierter Bioqualität, bereits während des Umpumpens in den Lagertank. Dabei können Stabilisierungsmittel, vorzugsweise Kieselsol, und Kohlensäure, vorzugsweise natürliche Quellen-Kohlensäure, zugesetzt werden.

Schritt (g) des erfindungsgemäßen Verfahrens umfasst die Durchführung weiterer Behandlungsschritte zur Stabilisierung, Klärung und Vervollständigung des Getränks. Vorzugsweise umfasst Schritt (g) eine mehrstufige Separations- und Filtrationsprozedur, die beispielsweise eine oder mehrere der folgenden Stufen beinhaltet:
(i) gegebenenfalls Tankstabilisierung mit Kieselsol,
(ii) Zentrifugation,
(iii) Grobfiltration, z.B. mit Kieselgur als adaptiven Filtrationsschritt, gegebenenfalls verbunden mit einer Gabe von Kieselgel, vorzugsweise als Alternative zu Schritt (i), und
(iv) eine ein- oder mehrstufige, insbesondere zweistufige Feinfiltration, z.B. eine Mikrofiltration, durch Kerzenfilter.

Anschließend kann das Getränk zur Abfüllung in einen Drucktank gepumpt werden.

Günstigerweise ist dabei darauf zu achten, dass Schritt (g) unter sauerstoffarmen Bedingungen durchgeführt wird, d.h. das Eindringen neuerlichen Luftsauerstoffs sollte vermieden werden.

Die anschließende Abfüllung kann nach üblichen Methoden unter Verwendung geeigneter Anlagen erfolgen. Vorzugsweise ist darauf zu achten, auch hier das Eindringen von Luftsauerstoff zu vermeiden. Weiterhin ist es bevorzugt, dass die Abfüllung unter aseptischen Bedingungen und/oder in Verbindung mit einer anschließenden Pasteurisation, z.B. durch Beaufschlagung von 30-500, vorzugsweise etwa 400 Pasteureinheiten bei Erfrischungsgetränken auf Fruchtsaftbasis und etwa 60 Pasteureinheiten bei Colagetränken, erfolgt.

In einer Abwandlung des zuvor beschriebenen Verfahrens kann auch ein Konzentrat des alkoholfreien Erfrischungsgetränks hergestellt werden, welches lager- und transportfähig ist. Hierzu wird dem fertig fermentierten Getränk (e) Wasser, vorzugsweise bis zu einem Anteil von verbleibender Trockensubstanz von 45-85%, bevorzugt von 50-60%, bezogen auf das Gesamtgewicht des Konzentrats, beispielsweise durch Einsatz einer Konzentrierungsanlage entzogen. Dieser Konzentrierungsschritt findet vorzugsweise nach Stabilisierung und Behandlung, z.B. wie in Schritt (g) beschrieben, statt. Dabei können allerdings die vorher für Schritt (f) beschriebenen Maßnahmen, insbesondere die Zugabe von Aromen und Kohlensäure entfallen. Statt dessen können diese Schritte, d.h. die Ausmischung mit Wasser und Aromen sowie der Zusatz von Kohlensäure, mit dem Konzentrat durchgeführt werden.

Das durch das erfindungsgemäße Verfahren erhältliche Getränk enthält durch Lactobacillen fermentiertes Sauergut in einem Anteil von vorzugsweise 0,5-15 Gew.-%, besonders bevorzugt 0,5-10 Gew.-%. Die dem Getränk damit zugeführte natürliche Milchsäure vermeidet den ansonsten bei alkoholfreien Getränken weit verbreiteten Zusatz isolierter, insbesondere künstlicher Zitronensäure oder anderer künstlicher Zusatzstoffe, insbesondere gesundheitlich kritischer Stoffe (z.B. E270, E300, E330). Das Getränk ist vorzugsweise frei von Rückständen aus Hefeorganismen und/oder Gluconobacter-Organismen.

Das durch das erfindungsgemäße Verfahren erhältliche alkoholfreie Erfrischungsgetränk auf Fruchtsaftbasis enthält vorzugsweise durch Lactobacillen fermentiertes Sauergut wie oben beschrieben in Anteilen von vorzugsweise 0,5-4,0 Gew.-%, besonders bevorzugt 1,5-2,5 Gew.-% oder von vorzugsweise 1,0-10 Gew.-%, besonders bevorzugt 2,5-5,0 Gew.-%.

Weiterhin enthält dieses Getränk Fruchtsaft aus Fruchtsaftkonzentrat, z.B. Trauben-, Holunder-, Apfel- und/oder Orangensaftkonzentrat, vorzugsweise in einem Anteil von insgesamt 20-40 Gew.-%.

Zusätzlich enthält dieses durch das erfindungsgemäße Verfahren hergestellte Getränk Fruchtaromen, vorzugsweise ausschließlich biozertifzierte natürliche Aromen, insbesondere Aromen aus den namensgebenden Früchten. Bevorzugte Aromatypen sind z.B. Holunder-Traube, Orange-Ingwer, Red Apple oder Lemon-Grass.

Der Gehalt an Kohlenhydraten für ein fruchtiges Erfrischungsgetränk beträgt vorzugsweise 4-5 g/100 ml, besonders bevorzugt etwa 4,4 g/100 ml. Der Anteil an fruchteigenem Zucker ist vorzugsweise ≥ 80 %. Das durch das erfindungsgemäße Verfahren hergestellte Getränk enthält günstigerweise 15-30g/l Glucose und 1-5g/l Maltose. Der Anteil von Glucose in Gewichtsprozent ist vorzugsweise 1,8-2,8 %. Der Anteil an Saccharose ist günstigerweise weniger als 2 g/l. Der Anteil an Saccharose plus Maltose ist günstigerweise weniger als 4 g/l.

Die physikalische Stabilität des Getränks ist vorzugsweise mehr als 10 Warmtage (Lagerung für jeweils 1 Tag bei 0 °C gefolgt von jeweils 1 Tag bei 40 °C). Diese hohe Stabilität wird erreicht durch die Vollfermentation und eine Lagerung bei 1 °C unter CO₂-Atmosphäre sowie gegebenenfalls Tankstabilisierung und/oder Stabilisierung durch eine Kieselgurfiltration.

Weiterhin ist bevorzugt, dass das resultierende Fertiggetränk maximal 1 mg/l, besonders bevorzugt 0,1-0,2 mg/l Restsauerstoff enthält.

Der Anteil an Gesamtsäure (berechnet als Zitronensäure) im erfindungsgemäß hergestellten Getränk auf Fruchtsaftbasis ist vorzugsweise 2,0-2,8g/l. Der Anteil an Milchsäure (enzymatisch bestimmt) ist vorzugsweise 0,40-2,40 g/l. Weiterhin ist bevorzugt, dass das erfindungsgemäß hergestellte Getränk weniger als 0,5 g/l, vorzugsweise weniger als 0,25 g/l Gluconsäure bzw. Gluoconat und/oder weniger als 1 g/l vorzugsweise weniger als 0,5 g/l Saccharose enthält.

Das durch das erfindungsgemäße Verfahren hergestellte alkoholfreie Colagetränk auf Basis von Agavendicksaft und Röstmalzbier enthält vorzugsweise fermentiertes Sauergut wie oben beschrieben in Anteilen von vorzugsweise 1-10 Gew.-%, besonders bevorzugt 4-6 Gew.-%.

Weiterhin enthält dieses Getränk Agavendicksaft, vorzugsweise in einem Anteil von insgesamt 10-20 Gew.-%. und Röstmalzbier, vorzugsweise in einem Anteil von insgesamt 0,5-1,5 Gew.-%.

Zusätzlich enthält dieses durch das erfindungsgemäße Verfahren hergestellte Getränk Fruchtaromen, vorzugsweise ausschließlich biozertifzierte natürliche Aromen, insbesondere Cola-Aromen.

Der Gehalt an Kohlenhydraten für ein Colagetränk beträgt vorzugsweise 8,0-11,0g/100ml, besonders bevorzugt etwa 10,0-10,4 g/100 ml oder 9,0-9,4 g/100 ml. Der Säuregrad des Getränks weist einen pH-Wert von 3,0-4,0 auf, besonders bevorzugt 3,1-3,4, resultierend in erster Linie aus dem Milchsäuregehalt im Fertiggetränk von 1,0-2,0g/l (berechnet als Zitronensäure), besonders bevorzugt von 1,4-1,6g/l. Der Anteil an Saccharose ist günstigerweise weniger als 2 g/l oder weniger als 1 g/l. Der Anteil an Saccharose plus Maltose ist günstigerweise weniger als 6 g/l.

Die physikalische Stabilität des Getränks ist vorzugsweise mehr als 10 Warmtage (Lagerung für jeweils 1 Tag bei 0 °C gefolgt von jeweils 1 Tag bei 40 °C). Diese hohe Stabilität wird erreicht durch die Vollfermentation und eine Lagerung bei 1 °C unter CO₂-Atmosphäre sowie gegebenenfalls Tankstabilisierung und/oder Stabilisierung durch eine Kieselgurfiltration.

Weiterhin ist bevorzugt, dass das resultierende Fertiggetränk maximal 1 mg/l, besonders bevorzugt 0,1-0,2 mg/l Restsauerstoff enthält.

Weiterhin ist bevorzugt, dass das resultierende Fertiggetränk 6,5-7,5 g/l, besonders bevorzugt 7,0 g/l Kohlensäure enthält.

Weiterhin ist bevorzugt, dass die Farbe des resultierenden fertigen Colagetränks eine Farbintensität von 45-90 EBC-Einheiten aufweist.

Der Anteil an Milchsäure im erfindungsgemäß hergestellten Colagetränk ist vorzugsweise 1,4-1,6 g/l. Weiterhin ist bevorzugt, dass das erfindungsgemäß hergestellte Getränk weniger als 0,5 g/l, vorzugsweise weniger als 0,25 g/l Gluconsäure bzw. Gluoconat enthält.

Noch ein weiterer Gegenstand der Erfindung ist ein Konzentrat für ein alkoholfreies Erfrischungsgetränk wie oben beschrieben. Das Konzentrat ist durch ein Verfahren nach den Schritten (a) - (e) und (h) erhältlich. Es weist einen Anteil an verbleibender Trockensubstanz von 45-85% bezogen auf das Gesamtgewicht auf.

### Beispiele

Die in den Beispielen 1-4 beschriebenen alkoholfreien Getränke auf Fruchtsaftbasis wurden nach dem deutschen Reinheitsgebot ausschließlich unter Verwendung biologischer (bio-zertifizierter) Rohstoffe hergestellt.

### Beispiel 1: Erfrischungsgetränk Holunder-Traube

Zur Herstellung des Getränks wurden folgende Zutaten verwendet:
- Mineralwasser
- Traubensaft aus Traubensaftkonzentrat (26 Gew.-%)
- Holundersaft aus Holundersaftkonzentrat (2 Gew.-%)
- Sauergut aus Gerstenmalz (2 oder 2,5 Gew.-%)
- biologische Aromen
- Kohlensäure

100 ml des Getränks enthalten 5,7 g Extrakt (berechnet über die rel. Dichte) und darin enthalten etwa 4,4 g Kohlenhydrate. Die bedeutendsten Kohlenhydrate sind wie folgt:

| | | |
|---|---|---|
| Saccharose | (ASU L 31.00-12 mod.enzymatisch) | < 0,5 g/l |
| Maltose | (ASU L 48.02.07-2 mod.enzymatisch) | 2,4 g/l |
| Glucose | (ASU L 31.00-12 mod.enzymatisch) | 20,7 g/l |
| Fructose | (ASU L 31.00-13 mod.enzymatisch) | 20,5 g/l |

### Beispiel 2: Erfrischungsgetränk Red Apple

Zur Herstellung des Getränks wurden folgende Zutaten verwendet:
- Mineralwasser
- Apfelsaft aus Apfelsaftkonzentrat (38 Gew.-%)
- Holundersaft aus Holundersaftkonzentrat (1 Gew.-%)
- Sauergut aus Gerstenmalz (2 oder 2,5 Gew.-%)
- biologische Aromen
- Kohlensäure

100 ml des Getränks enthalten 5,7 g Extrakt (berechnet über die rel. Dichte) und darin enthalten sind etwa 3,8 g Gesamtzucker. Die bedeutendsten Zucker sind wie folgt:

| | |
|---|---|
| Saccharose (IFU Nr. 56 mod.) | 1,9 g/l |
| Maltose (ASU L 48.02.07-2, enzymatisch) | 1,9 g/l |
| Glucose (IFU Nr. 55 mod.) | 11,0 g/l |
| Fructose (IFU Nr. 55 mod.) | 23,6 g/l |

### Beispiel 3: Erfrischungsgetränk Lemon-Grass

Zur Herstellung des Getränks wurden folgende Zutaten verwendet:
- Mineralwasser
- Traubensaft aus Traubensaftkonzentrat (28 Gew.-%)
- Sauergut aus Gerstenmalz (2 oder 2,5 Gew.-%)
- biologische Aromen
- Kohlensäure

100 ml des Getränks enthalten 5,5 g Extrakt (berechnet über die rel. Dichte) und darin enthalten sind etwa 4,4 g Gesamtzucker. Die bedeutendsten Zucker sind wie folgt:

| | |
|---|---|
| Saccharose (IFU Nr. 56 mod.) | 0,3 g/l |
| Maltose (ASU L 48.02.07-2, enzymatisch) | 1,9 g/l |
| Glucose (IFU Nr. 55 mod.) | 20,9 g/l |
| Fructose (IFU Nr. 55 mod.) | 21,0 g/l |

### Beispiel 4: Erfrischungsgetränk Orange-Ingwer

Zur Herstellung des Getränks wurden folgende Zutaten verwendet:
- Mineralwasser
- Traubensaft aus Traubensaftkonzentrat (28 Gew.-%)
- Sauergut aus Gerstenmalz (2 oder 2,5 Gew.-%)
- biologische Aromen
- Kohlensäure

100 ml des Getränks enthalten 5,2 g Extrakt (berechnet über die rel. Dichte) und darin enthalten sind etwa 4,5 g Gesamtzucker. Die bedeutendsten Zucker sind wie folgt:

| | |
|---|---|
| Saccharose (IFU Nr. 56 mod.) | < 0,05 g/l |
| Maltose (ASU L 48.02.07-2, enzymatisch) | 2,7 g/l |
| Glucose (IFU Nr. 55 mod.) | 20,6 g/l |
| Fructose (IFU Nr. 55 mod.) | 21,2 g/l |

Das nachfolgend in Beispiel 5 beschriebene Getränk wurde nach dem deutschen Reinheitsgebot und mit Ausnahme des natürlichen Aromas ausschließlich unter Verwendung biologischer Rohstoffe hergestellt.

### Beispiel 5: Bio Cola

Zutaten:
- Mineralwasser
- Agavendicksaft (13 Gew.-%)
- Sauergut aus Gerstenmalz (3,5 Gew.-% oder 5 Gew.-%)
- Röstmalzbier (1 Gew.-%)
- Natürliches Colaaroma
- Kohlensäure

100 ml des Getränks enthalten 10,2 g Extrakt (berechnet über die rel. Dichte) und darin enthalten sind etwa 9,1 g Gesamtzucker. Die bedeutendsten Zucker sind wie folgt:

| | |
|---|---|
| Saccharose (ASU L 31.00-13 mod. enzymatisch) | 0,05 g/l |
| Maltose (ASU L 48.02.07-2, enzymatisch) | 5,4 g/l |
| Glucose (SOP M294, enzymatisch) | 19,4 g/l |
| Fructose (SOP M294, enzymatisch) | 62,9 g/l |

## Patentansprüche

1. Verfahren zur fermentativen Herstellung eines alkoholfreien Getränks, umfassend die Schritte:
(a) Bereitstellen eines aufgeschlossenen Cerealienextrakts, z.B. aus (i) einer Mischung von Weizen- und Gerstenmalz, vorzugsweise mit einem Weizenanteil von 40-75 Gew.-%, (ii) einer Mischung von Melanoidin- und Gerstenmalz, vorzugsweise mit einem Melanoidinanteil von 1-10 Gew.-% oder (iii) Gerstenmalz,
(b) Erzeugen einer Würze aus dem Cerealienextrakt, bevorzugt in einer Maischprozedur, insbesondere in einer Mehrfachmaischprozedur,
(c) Behandeln der Würze aus Schritt (b) mit Lactobacillus-Mikroorganismen, um ein Sauergut zu erhalten, vorzugsweise mit einem Milchsäuregehalt von 0,6-1,2 Gew. %,
(d) Ausmischen des Sauerguts aus Schritt (c) mit einer Zucker enthaltenden Flüssigkeit, vorzugsweise Saft, Sirup, Konzentrat oder Nektar aus Früchten oder anderen pflanzlichen Materialien und gegebenenfalls von Röstmalzbier, und Behandeln der Mischung mit Lactobacillus-Mikroorganismen, um ein fermentiertes Getränk zu erhalten,
(e) Erhitzen des aus Schritt (d) erhaltenen fermentierten Getränks und anschließendes Abkühlen, bevorzugt mehrstufiges Abkühlen,
(f) Ausmischen des Getränks und
(g) Durchführen weiterer Behandlungsschritte zur Stabilisierung, Klärung und Vervollständigung des Getränks.

2. Verfahren nach Anspruch 1,
**dadurch gekennzeichnet,**
**dass** die Maischprozedur für eine Dauer von 1-6 h in einem Temperaturbereich von 30-80 °C bei atmosphärischem Druck durchgeführt wird.

3. Verfahren nach einem der Ansprüche 1 bis 2,
**dadurch gekennzeichnet,**
**dass** Schritt (b) eine Abtrennung von Feststoffen zur Erzeugung einer Vorderwürze, beispielsweise mit einem Stammwürzgehalt von 6-25%, vorzugsweise von 10-22% umfasst, wobei vorzugsweise ein Trübungswert unter 5 EBC-Einheiten erreicht wird und wobei vorzugsweise ein Glucoseanteil von 0,5-1,5Gew.-% und/oder ein Gewichtsverhältnis von Glucose zu Maltose von 1:4 bis 1:15 erreicht wird.

4. Verfahren nach einem der Ansprüche 1 bis 3,
**dadurch gekennzeichnet,**
**dass** Schritt (c) das Behandeln der Würze mit Lactobacillus-Organismen von 48-72 h bei einer Temperatur von 35-55 °C, vorzugsweise 45-48 °C, umfasst.

5. Verfahren nach einem der Ansprüche 1 bis 4,
**dadurch gekennzeichnet,**
**dass** Schritt (d) ein Verdünnen des Sauerguts auf eine Konzentration von 0,5-15 Gew.-% umfasst.

6. Verfahren nach einem der Ansprüche 1 bis 5,
**dadurch gekennzeichnet,**
**dass** Schritt (d) die Zugabe von (i) Fruchtsaft, (ii) Fruchtsaftkonzentrat oder (iii) Agavendicksaft und Röstmalzbier umfasst.

7. Verfahren nach einem der Ansprüche 1 bis 6,
**dadurch gekennzeichnet,**
**dass** Schritt (d) eine Vergärung bis zu einem Milchsäuregehalt von 0,05-0,6 Gew.-% umfasst.

8. Verfahren nach einem der Ansprüche 1 bis 7,
**dadurch gekennzeichnet,**
**dass** Schritt (f) eine intensive Durchmischung des Produkts umfasst, wobei ein Gehalt von 1-8 g CO₂ pro Liter Getränk erreicht wird.

9. Verfahren nach einem der Ansprüche 1 bis 8,
**dadurch gekennzeichnet,**
**dass** Schritt (g) eine mehrstufige Separations- und Filtrationsprozedur umfasst, die vorzugsweise folgende Stufen beinhaltet:
(i) gegebenenfalls Tankstabilisierung mit Kieselsol,
(ii) Zentrifugation,
(iii) Grobfiltration, gegebenenfalls mit Stabilisierungsschritt, und
(iv) ein- oder mehrstufige Feinfiltration,
gegebenenfalls unter sauerstoffarmen Bedingungen.

10. Herstellung eines Konzentrats für ein alkoholfreies Erfrischungsgetränk beispielsweise auf Fruchtsaftbasis oder auf Basis von Agavendicksaft und Röstmalzbier, umfassend die Schritte:
(a) Bereitstellen eines aufgeschlossenen Cerealienextrakts,
(b) Erzeugen einer Würze aus dem Cerealienextrakt,
(c) Behandeln der Würze aus Schritt (b) mit Lactobacillus-Mikroorganismen, um ein Sauergut zu erhalten,
(d) Ausmischen des Sauerguts aus Schritt (c) mit einer Zucker enthaltenden Flüssigkeit und Behandeln der Mischung mit Lactobacillus-Mikroorganismen, um ein fermentiertes Getränk zu erhalten,
(e) Erhitzen des fermentierten Getränks aus (d) und anschließendes Abkühlen,
(f) Entziehen von Wasser aus dem fermentierten Getränk, z.B. bis zu einem Anteil verbleibender Trockensubstanz von 45-85%, bevorzugt 50-60%, bezogen auf das Gesamtgewicht des Konzentrats, gegebenenfalls nach Stabilisierung und Behandlung, und gegebenenfalls ein Ausmischen des Getränks.

11. Grundprodukt zur Herstellung eines alkoholfreien Erfrischungsgetränks, erhältlich durch das Verfahren nach Anspruch 1 (a)-(d) und ggf. (e),
**dadurch gekennzeichnet,**
**dass** es durch Lactobacillen fermentiertes Sauergut in einem Anteil von 0,5-15 Gew.-% enthält.

12. Alkoholfreies Erfrischungsgetränk, erhältlich durch das Verfahren nach einem der Ansprüche 1-9,
**dadurch gekennzeichnet,**
**dass** es durch Lactobacillen fermentiertes Sauergut in einem Anteil von 0,5-15 Gew.-% enthält.

13. Erfrischungsgetränk nach Anspruch 12,
**dadurch gekennzeichnet,**
**dass** es frei von Rückständen aus Hefeorganismen ist.

14. Erfrischungsgetränk nach Anspruch 12 oder 13,
**dadurch gekennzeichnet,**
**dass** es ein fruchtiges Erfrischungsgetränk oder ein Colagetränk ist.

15. Konzentrat für ein alkoholfreies Erfrischungsgetränk, erhältlich durch das Verfahren nach Anspruch 10,
**dadurch gekennzeichnet,**
**dass** es einen Anteil an verbleibender Trockensubstanz von 45-85% bezogen auf das Gesamtgewicht aufweist.

## Claims

1. Method for producing a non-alcoholic beverage by fermentation, comprising the steps of:
(a) providing a macerated cereal extract, for example from (i) a mixture of wheat malt and barley malt, preferably having a wheat content of 40-75 wt.%, (ii) a mixture of melanoidin malt and barley malt, preferably having a melanoidin content of 1-10 wt.% or (iii) barley malt,
(b) producing a wort from the cereal extract, preferably in a mash procedure, in particular in a multi-step mash procedure,
(c) treating the wort from step (b) with lactobacillus microorganisms to obtain a sour wort, preferably having a lactic acid content of 0.6-1.2 wt.%,
(d) blending the sour wort from step (c) with a liquid containing sugar, preferably juice, syrup, concentrate or nectar from fruits or other plant materials and optionally roasted malt beer, and treating the mixture with lactobacillus microorganisms to obtain a fermented beverage,
(e) heating the fermented beverage resulting from step (d) and subsequent cooling, preferably multistage cooling,
(f) blending the beverage and
(g) performing further treatment steps to stabilise, clarify and finish the beverage.

2. Method according to claim 1, **characterised in that** the mash procedure is performed for a period of 1-6 h in a temperature range of 30-80 °C at atmospheric pressure.

3. Method according to either claim 1 or claim 2, **characterised in that** step (b) comprises separation of solids to produce a first wort run-off, for example having an original gravity of 6-25 %, preferably 10-22 %, a turbidity of below 5 EBC units preferably being achieved and a glucose content of 0.5-1.5 wt.% and/or a weight ratio of glucose to maltose of 1:4 to 1:15 preferably being achieved.

4. Method according to any of claims 1 to 3, **characterised in that** step (c) comprises treating the wort with lactobacillus organisms for 48-72 h at a temperature of 35-55 °C, preferably 45-48 °C.

5. Method according to any of claims 1 to 4, **characterised in that** step (d) comprises dilution of the sour wort to a concentration of 0.5-15 wt.%.

6. Method according to any of claims 1 to 5, **characterised in that** step (d) comprises the addition of (i) fruit juice, (ii) fruit juice concentrate or (iii) thick agave juice and roasted malt beer.

7. Method according to any of claims 1 to 6, **characterised in that** step (d) comprises fermentation to a lactic acid content of 0.05-0.6 wt.%.

8. Method according to any of claims 1 to 7, **characterised in that** step (f) comprises intensive thorough mixing of the product, a content of 1-8 g CO₂ per litre of beverage being achieved.

9. Method according to any of claims 1 to 8, **characterised in that** step (g) comprises a multistage separation and filtration procedure, which preferably includes the following steps:
(i) optionally tank stabilisation with silica sol,
(ii) centrifugation,
(iii) coarse filtration, optionally with stabilising step, and
(iv) single or multistage fine filtration,
optionally under oxygen-depleted conditions.

10. Production of a concentrate for a non-alcoholic soft beverage for example on a fruit juice basis or on the basis of thick agave juice and roasted malt beer, comprising the steps of:
(a) providing a macerated cereal extract,
(b) producing a wort from the cereal extract,
(c) treating the wort from step (b) with lactobacillus microorganisms to obtain a sour wort,
(d) blending the sour wort from step (c) with a liquid containing sugar and treating the mixture with lactobacillus microorganisms to obtain a fermented beverage,
(e) heating the fermented beverage from (d) and subsequent cooling,
(f) extracting water from the fermented beverage, for example to leave a proportion of dry solids of 45-85%, preferably 50-60% relative to the total weight of the concentrate, optionally after stabilisation and treatment, and optionally blending the beverage.

11. Base material for producing a non-alcoholic soft beverage, obtainable by the method according to claim 1(a) to (d) and optionally (e), **characterised in that** it contains sour wort fermented by lactobacilli in a proportion of 0.5-15 wt.%

12. Non-alcoholic soft beverage, obtainable by the method according to any of claims 1 to 9, **characterised in that** it contains sour wort fermented by lactobacilli in a proportion of 0.5-15 wt.%.

13. Soft beverage according to claim 12, **characterised in that** it is free of residues of yeast organisms.

14. Soft beverage according to either claim 12 or claim 13, **characterised in that** it is a fruity soft beverage or a cola beverage.

15. Concentrate for a non-alcoholic soft beverage, obtainable by the method according to claim 10, **characterised in that** it comprises a residual proportion of dry solids of 45-85 % relative to the total weight.

## Revendications

1. Procédé de fabrication par fermentation d'une boisson sans alcool comprenant les étapes suivantes:
(a) la préparation d'un extrait de céréales digéré, par exemple à partir (i) d'un mélange de malt de blé et d'orge, de préférence avec une proportion de blé de 40 - 75 % en poids, (ii) d'un mélange de malt de mélanoïdine et d'orge, de préférence avec une proportion de mélanoïdine de 1 - 10 % en poids ou (iii) de malt d'orge,
(b) la production d'un moût à partir de l'extrait de céréales, de préférence, dans une méthode de brassage, particulièrement dans une méthode répétée de brassage,
(c) le traitement du moût de l'étape (b) avec un microorganisme du genre Lactobacillus, pour l'obtention d'un malt acide, de préférence avec une teneur en acide lactique de 0,6 - 1,2 % en poids,
(d) le mélange du malt acide de l'étape (c) avec un liquide contenant du sucre, de préférence du jus, du sirop, du concentré ou du nectar de fruits ou autres matières végétales et optionnellement de la bière de malt de seigle, et le traitement du mélange avec le microorganisme de genre Lactobacillus pour l'obtention d'une boisson fermentée,
(e) le chauffage de la boisson fermentée obtenue à l'étape (d) et le refroidissement consécutif, de préférence un refroidissement en plusieurs étapes,
(f) le mélange de la boisson et
(g) l'exécution d'étapes supplémentaires de traitement pour stabiliser, clarifier et enrichir la boisson.

2. Procédé selon la revendication 1, **caractérisé en ce que** la procédure de brassage est effectuée pendant une durée de 1 - 6 h dans un domaine de température de 30 - 80°C à pression atmosphérique.

3. Procédé selon une des revendications 1 à 2, **caractérisé en ce que** l'étape (b) comprend une séparation de substances solides pour la fabrication d'un moût, par exemple avec une densité initiale du moût de 6 - 25 %, de préférence de 10 - 22 %, dans lequel de préférence une valeur de trubité en dessous de 5 unités EBC est atteinte et dans lequel de préférence une proportion de glucose entre 0,5 - 1,5 % en poids et/ou un rapport en poids de glucose par rapport au maltose de 1:4 à 1:15 est atteint(e).

4. Procédé selon une des revendications 1 à 3, **caractérisé en ce que** l'étape (c) comprend le traitement du moût avec l'organisme du genre Lactibacillus pendant 48 - 72 h à une température de 35 - 55°C, de préférence de 45 - 48°C.

5. Procédé selon une des revendications 1 à 4, **caractérisé en ce que** l'étape (d) comprend une dilution du malt acide à une concentration de 0,5 - 15 % en poids.

6. Procédé selon une des revendications 1 à 5, **caractérisé en ce que** l'étape (d) comprend l'ajout de (i) jus de fruits, (ii) concentré de jus de fruits ou (iii) sirop d'agave et bière de malt de seigle.

7. Procédé selon une des revendications 1 à 6, **caractérisé en ce que** l'étape (d) comprend une fermentation jusqu'à l'obtention d'une teneur en acide lactique de 0,05 - 0,6 % en poids.

8. Procédé selon une des revendications 1 à 7, **caractérisé en ce que** l'étape (f) comprend un mélange intensif du produit dans lequel une teneur de 1 - 8 g en CO2 par litre de boisson est atteinte.

9. Procédé selon une des revendications 1 à 8, **caractérisé en ce que** l'étape (g) comprend une procédure en plusieurs étapes de séparation et de filtration qui contient les étapes suivantes :
(i) optionnellement la stabilisation du tank avec de la Terre de Diatomée,
(ii) la centrifugation,
(iii) la filtration grossière, optionnellement avec une étape de stabilisation, et
(iv) une ou plusieurs étapes de filtration fine, optionnellement sous des conditions de faible taux d'oxygène.

10. Fabrication d'un concentré pour une boisson rafraîchissante sans alcool par exemple à base de jus de fruits ou à base de sirop d'agaves et de bière de malt de seigle comprenant les étapes suivantes:
(a) la préparation d'un extrait de céréales digéré,
(b) la fabrication d'un moût dudit extrait de céréales,
(c) le traitement du moût de l'étape (b) avec un microorganisme du genre Lactobacillus pour l'obtention d'un malt acide,
(d) le mélange du malt acide de l'étape (c) avec un liquide contenant du sucre et le traitement du mélange par le microorganisme du genre Lactobacillus pour l'obtention d'une boisson fermentée,
(e) le chauffage de la boisson fermentée de (d) et le refroidissement consécutif,
(f) le retrait d'eau de la boisson fermentée, par exemple jusqu'à une proportion de substances sèches restantes de 45 - 85 %, de préférence de 50 - 60 %, par rapport au poids total du concentré, optionnellement après stabilisation et traitement, et optionnellement un mélange de la boisson.

11. Produit de base pour la production d'une boisson rafraîchissante sans alcool, obtenu par le procédé selon la revendication 1(a)-(d) et optionnellement (e), **caractérisé en ce qu'**il contient un moût acide fermenté dans une proportion de 0,5 - 15 % en poids grâce au microorganisme Lactobacillus.

12. Boisson rafraîchissante sans alcool, obtenue par le procédé selon une des revendications 1-9, **caractérisée en ce qu'**elle contient un moût acide fermenté dans une proportion de 0,5 - 15 % en poids grâce au microorganisme Lactobacillus.

13. Boisson rafraîchissante selon la revendication 12, **caractérisée en ce qu'**elle est exempte de résidus provenant d'organismes de levure.

14. Boisson rafraîchissante selon la revendication 12 ou 13, **caractérisée en ce qu'**elle est une boisson rafraîchissante fruitée ou une boisson au cola.

15. Concentré pour une boisson rafraîchissante sans alcool, obtenu par le procédé de la revendication 10, **caractérisé en ce qu'**il possède une proportion de substances sèches restantes de 45
- 85 % par rapport au poids total.
